# EUROPEAN PATENT SPECIFICATION

(11) **EP 2 889 463 B1**
(45) Date of publication and mention of the grant of the patent: **27.02.2019**
(21) Application number: 13804223.9
(22) Date of filing: 07.06.2013
(51) Int. Cl.: B01D 53/94, F01N 13/02, F01N 3/20, F01N 3/10

(54) **HIGH PERFORMANCE SCR CATALYST SYSTEM**
HOCHLEISTUNGSFÄHIGES SCR-KATALYSATORSYSTEM
SYSTÈME DE CATALYSEUR SCR HAUTE PERFORMANCE

(30) Priority: 12.06.2012 KR 20120062413
(43) Date of publication of application: 01.07.2015
(73) Proprietor: Heesung Catalysts Corporation, Siheung-si Gyeonggi-do 429-848 (KR)
(72) Inventor: HAN, Hyun-sik, Ansan-si Gyeonggi-do 425-870 (KR); KIM, Eun Seok, Ansan-si Gyeonggi-do 426-743 (KR); AHN, Neung-Gyun, Siheung-si Gyeonggi-do 429-450 (KR)
(74) Representative: Regimbeau
(86) International application number: PCT/KR2013/005003
(87) International publication number: WO 2013/187633

(56) References cited:
- WO-A2-2012/030127
- JP-A- 2002 239 346
- JP-A- 2003 314 254
- JP-A- 2003 326 137
- US-A- 5 491 120
- US-A1- 2005 056 004
- US-A1- 2010 251 700

## Description

### Technical Field

The present invention relates to a high performance SCR (Selective Catalytic Reduction) catalyst structure and, more particularly, to a high performance SCR catalyst system suitable for use in treatment of marine engine exhaust gas that discharges a large amount of SOF (Soluble Organic Fraction), which is configured such that an SOF removal catalyst module is provided to the back end of the engine and an SCR catalyst module is successively provided downstream thereof, thereby efficiently removing nitrogen oxide.

### Background Art

With stricter marine environmental regulations, SCR systems are utilized to control nitrogen oxide emitted from marine diesel engines. Such SCR systems are employed in decreasing the discharge of nitrogen oxide from marine engines. In these systems, ammonia is sprayed into an exhaust gas flow passing through a path containing a catalyst. Ammonia functions to reduce a large amount of nitrogen oxide in exhaust gas so that nitrogen oxide is converted into water and nitrogen. Since a catalyst for removing nitrogen oxide for use in the SCR system is expensive, stoichiometric control of exhaust gas/ammonia/catalyst reaction is required. Such a catalytically active material, such as a material for removing nitrogen oxide, is loaded on a support made of a fire resistant inorganic material or metal material. The catalysts for use in SCR systems may be classified into, depending on the type of preparation process, extruded SCR catalysts and coated SCR catalysts. An SCR catalyst may include a catalytically active material and a support and is typically prepared in the form of a honeycomb structure to prevent a drop in exhaust gas pressure. Such an SCR catalyst is generally provided to the back end of a marine engine. Examples of catalyst systems for use in the treatment of engine exhaust stream are notably disclosed in US 2005/0056004, JP 2003 314254, US 2010/0251700 and US 5,491,120.

### Disclosure

### Technical Problem

Recently, in order to improve fuel efficiency of a marine engine, a turbocharged engine having very high fuel efficiency is increasingly applied to ships. As such, when an SCR catalyst is provided to the back end of the turbocharged engine, a catalyst inlet temperature is about 230°C, which is lower than the optimal temperature for SCR catalysis, making it difficult to ensure SCR activity. In the case where SOF as a sticky liquid mixture comprising carbon, a sulfate and water discharged from the marine diesel engine is accumulated on the surface of the SCR catalyst, the SCR catalytic activity may decrease. Also, the case where an excess of SOF is introduced into the catalyst may cause honeycomb channels of the support of the catalyst to be clogged.

### Technical Solution

The present invention has been devised to solve problems with SCR catalyst systems for marine diesel engine exhaust gas treatment, especially turbocharged engine exhaust gas treatment. Hereinafter is disclosed a high performance SCR catalyst system, which is configured such that an SOF removal catalyst module is provided to the back end of an engine and an SCR catalyst module is successively provided downstream thereof, thus efficiently removing nitrogen oxide.

In addition, in order to solve problems with an SCR catalyst system for marine diesel engine exhaust gas treatment, especially turbocharged engine exhaust gas treatment, the present disclosure relates also to a high performance SCR catalyst system comprising an SCR module configured such that a catalyst component for removing SOF is integrally formed on an SCR catalyst material.

In the SCR catalyst system according to the present disclosure, the catalytically active material for removing SOF may be ceria, a ceria composite oxide or a mixture including ceria, and may include an oxide such as silica, zirconia and/or alumina to enhance bondability of the catalytically active material and adhesion of the support. The catalytically active material for removing SOF may be deposited into the support or may be applied on the inner wall of the support. The ceria composite oxide is an oxide composite containing ceria, and may contain 10 ∼ 20 parts by weight of ceria.

The invention is a high nitrogen oxide removing performance SCR (Selective Catalytic Reduction) catalyst system for diesel engine exhaust gas treatment, which is configured such that an SOF (Soluble Organic Fraction) removal catalyst module having a catalytically active material for removing SOF is provided to a back end of a diesel engine and an SCR catalyst module having an SCR catalytically active material is successively provided downstream thereof so as to efficiently remove nitrogen oxide, wherein the catalytically active material for removing SOF is an oxide composite containing 15% by weight of ceria and including silica, zirconia and alumina.

Unlimitedly, in the SOF removal module according to the present invention, the support is formed in a honeycomb structure and may include cordierite, silicon carbide, cordierite-α-alumina, silicon nitride, zircon mullite, spodumene, alumina-silica-magnesia, zircon silicate, sillimanite, magnesium silicate, zircon, petalite, α-alumina, and aluminosilicate. Preferably useful is cordierite.

In the SCR catalyst system according to the present invention, the SCR catalyst module is successively provided downstream of the SOF removal module. In the SCR catalyst module, examples of the catalytically active material deposited or applied inside the support may include, but are not limited to, vanadium series comprising vanadium and titanium oxide (TiO₂), tungsten oxide (WO₃) or molybdenum oxide (MoO₃) added thereto, zeolite series, and base metal oxides.

Also, in the high performance SCR catalyst system disclosed herein, the catalytically active material for removing SOF may be layered on the SCR catalyst, so that the SCR catalyst module is accompanied by SOF removal activity.

### Advantageous Effects

According to the present invention, an SCR catalyst system is applied to the back end of a marine diesel engine, especially a turbocharged engine, so that SOF can be decomposed at a relatively low temperature of 200°C or less, thus solving problems of deteriorating the activity of an SCR catalyst due to accumulation of SOF as a sticky liquid mixture on the surface of the SCR catalyst and of clogging honeycomb channels of the support due to stickiness of SOF.

### Description of Drawings

FIG. 1 schematically illustrates a conventional SCR catalyst system and an SCR catalyst system according to the present invention for use in a marine diesel engine; and
FIG. 2 illustrates a graph of the results of evaluation of SOF removal performance by an SOF removal catalyst according to the present invention and a typical oxide catalyst.

### Best Mode

The present invention addresses a high performance SCR catalyst system, which is configured such that an SOF removal catalyst module is provided to the back end of an engine and an SCR catalyst module is successively provided downstream thereof so as to remove nitrogen oxide discharged from marine diesel engines, wherein the SOF removal catalyst module has a a catalytically active material for removing SOF, which is an oxide composite containing 15% by weight of ceria and including silica, zirconia and alumina.

As used herein, the term "downstream" refers to a direction of flow of exhaust gas from the engine. The term "module" refers to a minimum device unit that performs a single function. For example, an SCR catalyst module indicates a catalyst device that performs an SCR function to remove nitrogen oxide discharged from a diesel engine, and an SOF removal module indicates a module for removing SOF as a sticky liquid mixture comprising carbon, a sulfate and water discharged from a diesel engine. The module may be formed with a support and a catalytically active material, and the catalytically active material may be applied on the inner wall of the support or may be deposited into the support.

The support may be provided in the form of a honeycomb structure so as to minimize a drop in pressure while exhaust gas discharged from the marine diesel engine passes through one or more catalyst modules. When the honeycomb structure, which is apparent to those skilled in the art, is schematically described, it has parallel gas flow passages extending therethrough from an inlet or an outlet of the support. As such, the passages are opened at the inlet and the outlet and are thus provided in the form of channels that are open paths that are substantially straight from the gas inlet to the gas output, and the channels are defined by thin inner walls.

The support for the SCR catalyst and the SOF removal catalyst according to the present invention is formed of a ceramic material, including cordierite, silicon carbide, cordierite-α-alumina, silicon nitride, alumina-silica-magnesia, zircon silicate, sillimanite, magnesium silicate, zircon, petalite, α-alumina, or aluminosilicate. Preferably useful is cordierite. The catalytically active material is deposited into pores of the support or applied on the inner wall of the support, depending on the porosity of the support. The SCR catalytically active material may include, but is not limited to, vanadium series comprising vanadium and titanium oxide (TiO₂), tungsten oxide (WO₃) or molybdenum oxide (MoO₃) added thereto, zeolite series, or base metal oxides. On the other hand, the catalytically active material for removing SOF is an oxide composite containing 15% by weight of ceria, and includes silica, zirconia and alumina to enhance bondability of the catalytically active material and adhesion of the support. In the oxide composite, if the amount of ceria is less than 10 parts by weight, SOF may not sufficiently decompose and channels of the downstream SCR catalyst module may thus be clogged. In contrast, if the amount thereof exceeds 20 parts by weight, SOF decomposition heat may become excessive, and thus the temperature thereof may exceed the optimal temperature for the downstream SCR catalyst module.

The method of manufacturing the SOF removal catalyst module or the SCR catalyst module according to the present invention is similar to conventional SCR catalyst preparation methods. When briefly described, such a catalyst module is manufactured by quantifying a catalytically active slurry able to form a thick coating layer on the inner wall of the support, immersing a ceramic support in the slurry so that the entire catalytically active material is applied on the inner wall of the support, and then firing it. A method of quantitatively applying the catalytically active material may be achieved by Korean Patent Application No. 10-2011-0098682 (Metered weight coater for precise PM control), filed 2011-09-29 by the present applicant, the disclosure of which is incorporated by reference in the present application.

In addition to the formation of the SCR catalyst system of the invention comprising a plurality of modules as above, the SCR catalyst system according to the present disclosure may comprise an SCR module configured such that a catalytically active material for removing SOF is integrally formed on an SCR catalytically active material.

Below is a description of the SCR catalyst system according to the present invention with reference to the appended drawings.

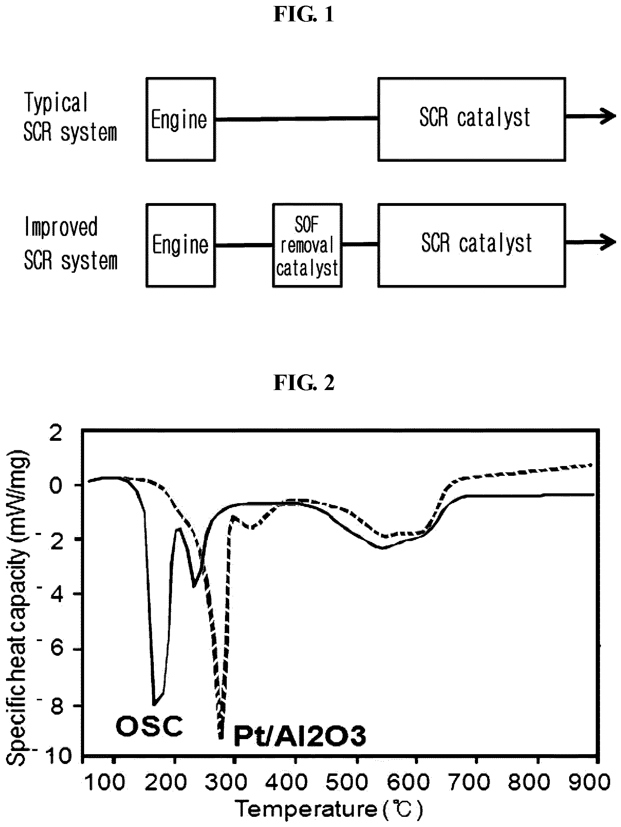

In the present invention, it is confirmed that SOF contained in a large amount in diesel engine exhaust gas may be efficiently removed by the use of an oxide composite containing ceria. Since SOF is sticky, it may clog the channels of the SCR catalyst module and may ultimately deteriorate the activity of the SCR catalyst. FIG. 2 illustrates a graph of the results of evaluation of SOF removal performance by the SOF removal catalyst according to the present invention and the typical oxide catalyst. The oxide composite (represented by OSC) containing 15 % by weight of ceria and including silica, zirconia and alumina may function to remove SOF at a relatively low temperature, compared to the typical oxide catalyst (Pt/Al₂O₃). Testing for FIG. 2 was carried out using a differential scanning calorimeter (DSC) by applying lubricant oil and carbon powder in lieu of SOF on the corresponding catalysts, increasing the temperature from room temperature to 900°C, and setting the air flow rate to 400 cc/min. As is apparent from FIG. 2, the OSC component generated heat at a temperature less than or equal to 200°C but the typical oxide catalyst decomposed SOF at a temperature up to 300°C. Hence, when the oxide composite containing ceria and including silica, zirconia and alumina is applied to the back end of a marine diesel engine, especially a turbocharged engine, SOF may be decomposed at relatively low temperature. Thereby, problems of deteriorating the activity of the SCR catalyst due to accumulation of SOF as a sticky liquid mixture on the surface of the SCR catalyst and of clogging honeycomb channels of the support due to stickiness of SOF may be solved. Because of the decomposition heat, the corresponding temperature may be rapidly increased to an optimal temperature of 300 ∼ 450°C when the SCR catalyst is vanadium (V₂O₅) series, or may be rapidly increased to an optimal temperature of 350 ∼ 600°C when the SCR catalyst is zeolite series, whereby optimal performance may be conducted. FIG. 1 schematically illustrates the conventional SCR catalyst system and the SCR catalyst system according to the present invention for use in marine diesel engines. As illustrated in FIG. 1, the SCR catalyst system according to the present invention is configured such that the SOF removal catalyst module is provided to the back end of an engine, especially a turbocharged engine, and the SCR catalyst module is successively provided downstream thereof, thus efficiently removing nitrogen oxide, compared to the conventional SCR catalyst system. Although not shown in the drawings, in order to solve problems with the SCR catalyst system for marine diesel engine exhaust gas treatment, especially turbocharged engine exhaust gas treatment, in an aspect of the disclosure the SOF removal catalyst component may be integrally formed on the SCR catalyst material. As such, the integrated SCR catalyst module may be directly provided to the end of the engine. The method of manufacturing the integrated catalyst module is apparent to those skilled in the art.

## Claims

1. A high nitrogen oxide removing performance SCR (Selective Catalytic Reduction) catalyst system for diesel engine exhaust gas treatment, which is configured such that an SOF (Soluble Organic Fraction) removal catalyst module having a catalytically active material for removing SOF is provided to a back end of a diesel engine and an SCR catalyst module having an SCR catalytically active material is successively provided downstream thereof so as to efficiently remove nitrogen oxide, wherein the catalytically active material for removing SOF is an oxide composite containing 15% by weight of ceria and including silica, zirconia and alumina.

2. The high performance SCR catalyst system according to claim 1, wherein the catalytically active material for removing SOF or the SCR catalytically active material is applied on an inner wall of a honeycomb support.

3. The high performance SCR catalyst system according to claim 2, wherein the support comprises cordierite, silicon carbide, cordierite-α-alumina, silicon nitride, zircon mullite, spodumene, alumina-silica-magnesia, zircon silicate, sillimanite, magnesium silicate, zircon, petalite, α-alumina, or aluminosilicate.

## Patentansprüche

1. Katalysatorsystem mit hoher Stickoxidentfernungsleistung für selektive katalytische Reduktion (SKR) zur Dieselmotor-Abgasbehandlung, das derart ausgelegt ist, dass ein Katalysatormodul zur Entfernung löslicher organischer Fraktionen (LOF) mit einem katalytisch aktiven Material zum Entfernen von LOF an einem hinteren Ende eines Dieselmotors vorgesehen ist, und anschließend ein SKR-Katalysatormodul mit einem SKR-katalytisch aktiven Material stromabwärts davon vorgesehen ist, um Stickoxid wirksam zu entfernen, wobei das katalytisch wirksame Material zum Entfernen von LOF ein Oxidverbundstoff ist, das 15 Gewichts% Cerdioxid enthält und Siliciumdioxid, Zirconiumdioxid und Aluminiumoxid umfasst.

2. Hochleistungs-SKR-Katalysatorsystem nach Anspruch 1, wobei das katalytisch aktive Material zum Entfernen von LOF oder das SKR-katalytisch aktive Material auf eine Innenwand eines Wabenträgers aufgebracht ist.

3. Hochleistungs-SKR-Katalysatorsystem nach Anspruch 2, wobei der Träger Cordierit, Siliciumcarbid, Cordierit-α-Aluminiumoxid, Siliciumnitrid, Zirconmullit, Spodumen, Aluminiumoxid-Siliciumdioxid-Magnesiumoxid, Zirconsilicat, Sillimanit, Magnesiumsilicat, Zircon, Petalit, α-Aluminiumoxid oder Alumosilicat umfasst.

## Revendications

1. Système catalyseur RCS (réduction catalytique sélective) haute performance pour éliminer les oxydes d'azote destiné au traitement des gaz d'échappement d'un moteur diesel, qui est configuré de telle sorte qu'un module catalyseur d'élimination de FOS (fraction organique soluble) ayant un matériau catalytiquement actif pour éliminer la FOS est disposé à l'extrémité arrière d'un moteur diésel et qu'un module catalyseur RCS ayant un matériau catalytiquement actif de RCS est successivement disposé en aval de celui-ci de façon à éliminer efficacement les oxydes d'azote, dans lequel le matériau catalytiquement actif pour éliminer la FOS est un oxyde composite contenant 15 % en poids d'oxyde de cérium et contenant de la silice, de la zircone et de l'alumine.

2. Système catalyseur RCS haute performance selon la revendication 1, dans lequel le matériau catalytiquement actif pour éliminer la FOS ou le matériau catalytiquement actif de RCS est appliqué sur une paroi intérieure d'un support en nid d'abeilles.

3. Système catalyseur RCS haute performance selon la revendication 2, dans lequel le support comprend de la cordiérite, du carbure de silicium, de la cordiérite-α-alumine, du nitrure de silicium, du zircon-mullite, du spodumène, de l'alumine-silice-magnésie, du silicate de zircon, de la sillimanite, du silicate de magnésium, du zircon, de la pétalite, de l'a-alumine, ou un aluminosilicate.
